# EUROPEAN PATENT SPECIFICATION

(11) **EP 1 221 282 B1**
(45) Date of publication and mention of the grant of the patent: **20.02.2008**
(21) Application number: 01204641.3
(22) Date of filing: 03.12.2001
(51) Int. Cl.: A01J 7/02

(54) **A device for and a method of cleaning a milking machine, and a milking machine**
Vorrichtung und Verfahren zur Reinigung einer Melkmaschine, und Melkmaschine
Appareil et procédé pour le nettoyage d'une machine à traire, et machine à traire

(30) Priority: 08.01.2001 NL 1017047
(43) Date of publication of application: 10.07.2002
(73) Proprietor: Lely Enterprises AG, 6300 ZUG (CH)
(72) Inventor: van der Lely, Alexander, 3065 NA Rotterdam (NL)
(74) Representative: Corten, Maurice Jean F.M.

(56) References cited:
- NL-C- 1 007 727
- US-A- 6 079 359

## Description

The invention relates to a device for cleaning at least a part of one or more milking machines for milking animals, said device being provided with a reservoir for containing cleaning fluid, with a supply line connected to the reservoir for supplying cleaning fluid to the part to be cleaned, and with a heating member for heating the cleaning fluid.

Such a device is known from Dutch patent application 1007727. Said device may sometimes be cleaning at the moment a farmer wishes to milk animals, which, of course, is undesirable. Furthermore, the energy costs of such a device appear to be relatively high. US-A 6,079,359 discloses a cleaning device for a milking machine with a reservoir, a supply line and a heating member. A thermostat under computer control starts heating the cleaning fluid when its temperature falls below a certain minimum value.

The invention aims at obviating these drawbacks or at least partially limiting same.

For that purpose a cleaning device of the above-described type according to the invention is characterized in that the device is provided with a heating start member for activating the heating member immediately after a fixed, predetermined period counted from the preceding heating start activation has elapsed. The invention is based on the insight that with the known device the heating of the cleaning fluid, by which is also meant a rinsing fluid according to the invention, is started after a fixed period of time has elapsed from the moment when the preceding cleaning has ended. The duration of a complete cleaning being variable, after a certain number of cleaning operations it is no longer possible for a farmer to know exactly when the device is active or non-active. Moreover, it may occur that the device is cleaning at points of time when energy costs are highest. By making the start of the heating of the cleaning fluid take place according to the invention at fixed points of time, these drawbacks are obviated at least for the greater part. The points of time for cleaning can be set in such a manner that they are within those periods of time when energy costs are low (e.g. night-tariff supply). Furthermore, the cleaning begins at points of time which are known to the farmer and which do not change in the course of time, so that the farmer is not unexpectedly confronted with a milking machine that is being cleaned at the moment he wishes to milk an animal in the milking machine.

In a preferred embodiment the device is provided with a cleaning start member for starting the cleaning, with a measuring member for measuring the temperature of the cleaning fluid and for issuing a temperature signal to the cleaning start member, the cleaning start member starting the cleaning after the temperature signal has reached a predetermined temperature value. In this manner the actual cleaning only takes place when the cleaning fluid has reached a desired temperature. Thus it is prevented that the cleaning takes place at a too low temperature, in which case an undesired result would be obtained.

It is advantageous when the device is provided with a memory for containing heating data measured by the temperature measuring member. These heating data can be used inter alia for checking whether the device functions properly.

The milking machine can be used more efficiently in an embodiment of a device according to the invention which is characterized in that the device is provided with a calculating member for determining the remaining heating duration until the predetermined temperature value has been reached, on the basis of the heating data stored in the memory and the momentary temperature of the cleaning fluid as measured by the measuring member. The heating of the cleaning fluid until it has reached the desired temperature taking some time, said time, provided it is considered as sufficient by the farmer, can optionally be used for milking an animal. Moreover, the cleaning fluid has not to be kept at the desired temperature unnecessarily long prior to starting the cleaning, which is energy-saving.

In order to guarantee inter alia the safety of the animals, in an embodiment the device is provided with a detection member for detecting the presence respectively the absence of an animal in a milking machine to be cleaned. The detection member is preferably suitable for issuing a signal to the cleaning start member, the cleaning start member in particular only being capable of being activated on receipt of a signal from the detection member indicating that there is no animal present in the milking machine to be cleaned.

A highly automated functioning of the device according to the invention can be obtained when the device is provided with an identification system for establishing the identity of an animal, said identification system containing data in relation to the expected milking duration of the animal, and when the milking machine has an entrance gate controlled by means of the calculating member, said entrance gate being closed when the expected milking duration is longer than the remaining heating duration. Such an identification system for determining the identity, and the corresponding (updated) expected milking duration of an animal, is known per se.

The invention further relates to a method of cleaning at least a part of a milking machine, said method comprising the step of heating cleaning fluid, characterized in that the heating of the cleaning fluid is started immediately after a fixed, predetermined period counted from the preceding heating start activation has elapsed.

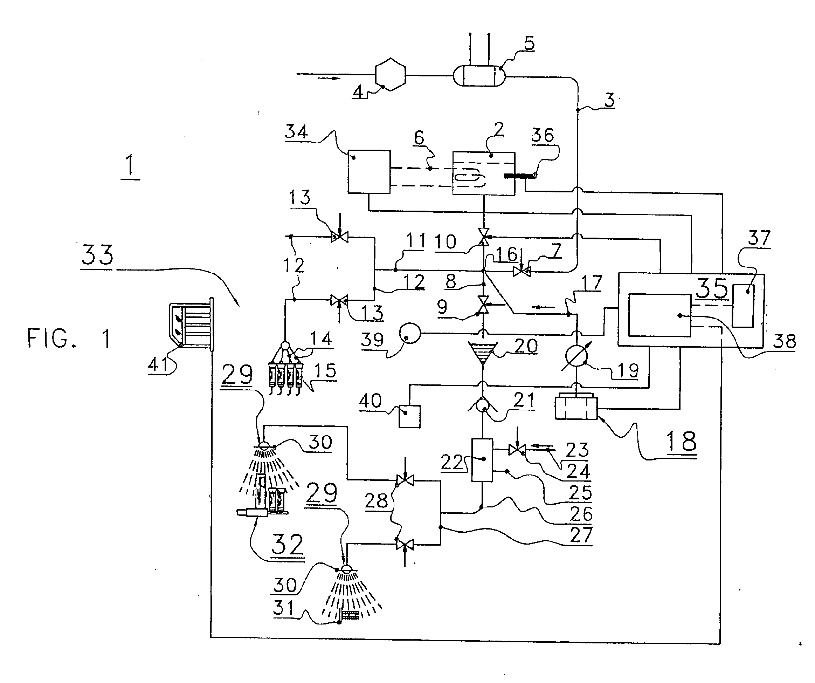

The invention will now be further elucidated with reference to the only Figure 1.

Figure 1 shows an example of a device for cleaning at least a part of one or more milking machines according to the invention. It will be obvious that the invention is not limited to this embodiment shown, but that within the scope of the person skilled in the art various specific embodiments of the invention are possible.

The device 1 for cleaning at least a part of the milking machine shown in Figure 1, comprises a reservoir 2 for cleaning fluid (by which is also meant rinsing fluid). To the reservoir 2 there is connected a supply line 3. The supply line 3 can be connected itself to the water supply system. In the supply line 3 there is included e.g. a protecting device 4 for preventing the cleaning fluid from flowing into the supply line 3 in the direction opposite to the direction towards the reservoir 2. In the supply line 3 there is preferably further included a heat exchanger 5 with the aid of which the fluid can be heated. The heat exchanger 5 can make use of the heat given off during the cooling of the milk.

In the reservoir 2 there is included a heating member or heating element 6 by means of which the fluid present in the reservoir 2 can be heated. The heated fluid is used for a heat cleaning known per se.

In the supply line 3 there is included e.g. a first shut-off valve 7. To the supply line 3 there is further connected a first discharge line 8 in which a second shut-off valve 9 is included. Between the first shut-off valve 7 and the reservoir 2 there is included a third shut-off valve 10 in the supply line 3. At the place where the first discharge line 8 is connected to the supply line 3 there is connected a further line 11 splitting up into two lines 12 each provided with a fourth shut-off valve 13. At the end of the lines 12 there are provided connecting elements 14 adapted for being connected to teat cups 15 of a milking machine 33. Via the connecting elements 14 fluid can be supplied to the teat cups 15 and the milk lines connected therewith. It will be obvious that there can also be coupled a milking cluster to the other line, while it is also possible that still more lines 12 branch off from the further fluid line 11 for cleaning still other parts of the milking machine 33.

At the crossing 16 where the first discharge line 8 and the further discharge lines 11 are connected to the supply line 3, there is also connected a further line 17 of a metering device 18 with the aid of which an additive, such as a base or an acid, can be supplied to the cleaning or rinsing fluid. The metering device 18 comprises e.g. a computer-controlled metering unit 19.

In the first discharge line 8 there are included a filter 20 and a non-return valve 21, as well as a buffer reservoir 22. The buffer reservoir 22 comprises a supply line 23 through which additives can be supplied to the buffer reservoir 22. The supply line 23 can be closed by means of a fifth shut-off valve 24. To the supply line 23 there can be connected a similar metering device as the metering device 18. To the buffer reservoir 22 there is further connected a compressed air line 25 with the aid of which pressure can be applied to the buffer reservoir 22 and a cleaning or rinsing fluid present therein. The buffer reservoir 22 is further provided with a buffer discharge line 26 splitting up in this embodiment into two further lines 27. It will be obvious that the number of further lines 27 depends on the number of parts of the milking machine that have to be cleaned. Each of the further lines 27 is provided with a sixth shut-off valve 28. At the end of the further lines 27 there is a spray-cleaning member 29 by means of which a part of the milking machine 33 can be cleaned with cleaning and/or rinsing fluid. The member 29 comprises e.g. a spraying head 30. In one case by means of the member 29 there is cleaned a brush 31 adapted for cleaning the teats of the animal, while by means of the other member a part of a robot arm 32 of a not entirely shown milking robot is cleaned.

The device 1 comprises a heating start member 34 starting the heating of the fluid by means of the heating member 6. The moment of starting the heating is immediately after a fixed, predetermined period counted from the preceding start activation of the heating by means of the heating member 6 has elapsed. A measuring member 36 measures the temperature of the cleaning fluid and issues a temperature signal to a cleaning start member 35. When the temperature signal indicates that a predetermined temperature value has been reached, the cleaning start member 35 starts the actual cleaning. For that purpose the cleaning start member 35 is connected to the parts of the device 1 that are relevant to the cleaning.

In order to be able inter alia to check the cleaning, there is provided a memory 37 for containing heating data measured by the temperature measuring member 36. Furthermore, a calculating member 38 can determine the remaining heating duration until the predetermined temperature value has been reached, on the basis of the heating data stored in the memory 37 and the momentary temperature of the cleaning fluid as measured by the measuring member 36.

A detection member 39 for detecting the presence respectively the absence of an animal in a milking machine 33 to be cleaned can be used for preventing the device from cleaning the milking machine 33 at the moment when an animal is being milked. For that purpose the detection member 39 issues a signal to the cleaning start member 35.

The device 1 preferably operates as follows:

When a predetermined, fixed period has elapsed since the preceding start activation of the heating member 6, the heating member 6 is again activated by the heating start member 34, and the fluid is heated.

The detection member 39 detects whether or not there is an animal present in the milking machine. When there is an animal present, the cleaning member 35 exclusively starts the actual cleaning only on receipt of a signal from the detection member 39 indicating that the animal has left the milking machine.

In order to provide a more efficient use of the milking machine 33 and the cleaning device 1, an identification system 40 known per se establishes the identity of an animal reporting at the milking machine 33 for being milked. On the basis of the identity, there can be obtained an expected milking duration of the animal, stored in a memory and possibly continually updated. When this expected milking duration is longer than the remaining heating duration, as determined by means of the measuring member 36 and the calculating member 38, an entrance gate 41 to the milking machine 33 remains closed when an animal reports.

Exclusively in the case that the expected milking duration is shorter than the remaining heating duration, the animal is still allowed to enter the milking machine 33 for being milked, while at the same time the fluid in the reservoir 2 is heated.

When it is no longer possible to milk an animal, after the animal has left the milking machine 33 the actual cleaning is started at the moment when the fluid has reached the desired temperature. The desired temperature depends on the kind of cleaning process being applied. In the case that heat cleaning is applied, the temperature will amount to more than 70°.

In the case that certain parts of the milking machine 33 can be cleaned or rinsed at a lower temperature, it is possible to ensure by a proper control, also of the relevant shut-off valves, that these parts are cleaned or rinsed at the moment of reaching that temperature. Further it is also possible proportionally to supply an additive, such as e.g. chlorine, acid, base, etc., to the fluid via the metering device 18 during cleaning.

Via the supply line 23 there can also be supplied an additive, such as e.g. sodium hypochlorite, to the buffer reservoir 22. There can be applied pressure to this mixture via the compressed air line 25. Via the further lines 27 and the spraying heads 30 it is possible to clean, c.q. to disinfect the brush 31 and the robot arm 32 under high pressure.

## Claims

1. A device (1) for cleaning at least a part of one or more milking machines (33) for milking animals, said device (1) being provided with:
a reservoir (2) for containing cleaning fluid,
a supply line (3) connected to the reservoir (2) for supplying cleaning fluid to the part (15, 31, 32) to be cleaned, and
a heating member (6) for heating the cleaning fluid,
**characterized in that** the device (1) is provided with a heating start member (34) for activating the heating member (6) immediately after a fixed, predetermined period counted from the preceding heating start activation has elapsed.

2. A device (1) as claimed in claim 1, **characterized in that** the device (1) is provided with a cleaning start member (35) for starting the cleaning, and with a measuring member (36) for measuring the temperature of the cleaning fluid and for issuing a temperature signal to the cleaning start member (35), the cleaning start member (35) starting the cleaning after the temperature signal has reached a predetermined temperature value.

3. A device (1) as claimed in claim 2, **characterized in that** the device (1) is provided with a memory (37) for containing heating data measured by the temperature measuring member (36).

4. A device (1) as claimed in claim 3, **characterized in that** the device (1) is provided with a calculating member (38) for determining the remaining heating duration until the predetermined temperature value has been reached, on the basis of the heating data stored in the memory (37) and the momentary temperature of the cleaning fluid as measured by the measuring member (36).

5. A device (1) as claimed in any one of the preceding claims, **characterized in that** the device (1) is provided with a detection member (39) for detecting the presence respectively the absence of an animal in a milking machine (33) to be cleaned.

6. A device (1) as claimed in claim 5, **characterized in that** the detection member (39) is suitable for issuing a signal to the cleaning start member (35).

7. A device (1) as claimed in claim 6, **characterized in that** the cleaning start member (35) can only be activated on receipt of a signal from the detection member (39) indicating that there is no animal present in the milking machine (33) to be cleaned.

8. A device (1) as claimed in claim 4, **characterized in that** the device (1) is provided with an identification system (40) for establishing the identity of an animal, said identification system (40) containing data in relation to the expected milking duration of the animal, and **in that** the milking machine (33) has an entrance gate (41) controlled by means of the calculating member (38), said entrance gate (41) being closed when the expected milking duration is longer than the remaining heating duration.

9. A method of cleaning at least a part (15, 31, 32) of a milking machine (33), said method comprising the step of heating cleaning fluid, **characterized in that** the heating of the cleaning fluid is started immediately after a fixed, predetermined period counted from the preceding heating start activation has elapsed.

10. A method as claimed in claim 9, **characterized in that** the temperature of the cleaning fluid is measured, the cleaning being started after the temperature has reached a predetermined temperature value.

11. A method as claimed in claim 10, **characterized in that** measured heating data are stored in a memory (37).

12. A method as claimed in claim 11, **characterized in that** the remaining heating duration until the predetermined temperature value has been reached is determined on the basis of the heating data stored in the memory (37) and the measured momentary temperature of the cleaning fluid.

13. A method as claimed in any one of the preceding claims 9 through 12, **characterized in that** the presence respectively the absence of an animal in the milking machine (33) is detected.

14. A method as claimed in claim 13, **characterized in that** the cleaning is only activated when there is no animal present in the milking machine (33).

15. A method as claimed in claim 12, **characterized in that** the identity and the expected milking duration of an animal is determined, and **in that** the animal is not allowed to enter the milking machine (33) when the expected milking duration is longer than the remaining heating duration.

## Patentansprüche

1. Vorrichtung (1) zum Reinigen zumindest eines Teiles einer oder mehrerer Melkmaschinen (33) zum Melken von Tieren, wobei die Vorrichtung (1) versehen ist mit:
- einem Behälter (2) zur Aufnahme von Reinigungsfluid,
- einer mit dem Behälter (2) verbundenen Zuführleitung (3) zum Zuführen von Reinigungsfluid zu dem zu reinigenden Teil (15, 31, 32) und
- einem Heizelement (6) zum Erhitzen des Reinigungsfluids,
**dadurch gekennzeichnet, dass** die Vorrichtung (1) mit einem Heizungsstartelement (34) versehen ist, um das Heizelement (6) sofort zu aktivieren, nachdem ein festgelegter vorgegebener Zeitraum seit der vorhergehenden Heizungsstart-Aktivierung verstrichen ist.

2. Vorrichtung (1) nach Anspruch 1,
**dadurch gekennzeichnet, dass** die Vorrichtung (1) mit einem Reinigungsstartelement (35) versehen ist, um die Reinigung zu starten, sowie mit einem Messelement (36), um die Temperatur des Reinigungsfluids zu messen und ein Temperatursignal an das Reinigungsstartelement (35) zu geben, wobei das Reinigungsstartelement (35) die Reinigung startet, nachdem das Temperatursignal einen vorgegebenen Temperaturwert erreicht hat.

3. Vorrichtung (1) nach Anspruch 2,
**dadurch gekennzeichnet, dass** die Vorrichtung (1) mit einem Speicher (37) zum Speichern von durch das Temperaturmesselement (36) gemessenen Heizungsdaten versehen ist.

4. Vorrichtung (1) nach Anspruch 3,
**dadurch gekennzeichnet, dass** die Vorrichtung (1) mit einem Rechenelement (38) versehen ist, um auf der Basis der in dem Speicher (37) gespeicherten Heizungsdaten und der von dem Messelement (36) gemessenen, momentanen Temperatur des Reinigungsfluids die restliche Heizungsdauer bis zum Erreichen des vorgegebenen Temperaturwertes zu ermitteln.

5. Vorrichtung (1) nach einem der vorhergehenden Ansprüche,
**dadurch gekennzeichnet, dass** die Vorrichtung (1) mit einem Detektionselement (39) zum Detektieren der Anwesenheit bzw. der Abwesenheit eines Tieres in einer zu reinigenden Melkmaschine (33) versehen ist.

6. Vorrichtung (1) nach Anspruch 5,
**dadurch gekennzeichnet, dass** das Detektionselement (39) geeignet ist, ein Signal an das Reinigungsstartelement (35) zu geben.

7. Vorrichtung (1) nach Anspruch 6,
**dadurch gekennzeichnet, dass** das Reinigungsstartelement (35) nur dann aktiviert werden kann, wenn es ein Signal von dem Detektionselement (39) bekommt, das anzeigt, dass sich in der zu reinigenden Melkmaschine (33) kein Tier aufhält.

8. Vorrichtung (1) nach Anspruch 4,
**dadurch gekennzeichnet, dass** die Vorrichtung (1) mit einem Identifikationssystem (40) zur Ermittlung der Identität eines Tieres versehen ist, wobei das Identifikationssystem (40) Daten bezüglich der voraussichtlichen Melkdauer des Tieres enthält, und dass die Melkmaschine (33) eine von dem Rechenelement (38) gesteuerte Eingangstür (41) aufweist, wobei die Eingangstür (41) geschlossen wird, wenn die voraussichtliche Melkdauer länger als die restliche Heizungsdauer ist.

9. Verfahren zum Reinigen zumindest eines Teiles (15, 31, 32) einer Melkmaschine (33), wobei das Verfahren den Verfahrensschritt des Erhitzens von Reinigungsfluid umfasst,
**dadurch gekennzeichnet, dass** das Erhitzen des Reinigungsfluids sofort gestartet wird, nachdem ein festgelegter vorgegebener Zeitraum seit der vorhergehenden Heizungsstartaktivierung verstrichen ist.

10. Verfahren nach Anspruch 9,
**dadurch gekennzeichnet, dass** die Temperatur des Reinigungsfluids gemessen wird, wobei die Reinigung gestartet wird, nachdem die Temperatur einen vorgegebenen Temperaturwert erreicht hat.

11. Verfahren nach Anspruch 10,
**dadurch gekennzeichnet, dass** die gemessenen Heizungsdaten in einem Speicher (37) gespeichert werden.

12. Verfahren nach Anspruch 11,
**dadurch gekennzeichnet, dass** auf der Basis der in dem Speicher (37) gespeicherten Heizungsdaten und der gemessenen momentanen Temperatur des Reinigungsfluids die restliche Heizungsdauer bis zum Erreichen des vorgegebenen Temperaturwertes ermittelt wird.

13. Verfahren nach einem der vorhergehenden Ansprüche 9 bis 12,
**dadurch gekennzeichnet, dass** die Anwesenheit bzw. die Abwesenheit eines Tieres in der Melkmaschine (33) detektiert wird.

14. Verfahren nach Anspruch 13,
**dadurch gekennzeichnet, dass** die Reinigung nur dann aktiviert wird, wenn sich kein Tier in der Melkmaschine (33) aufhält.

15. Verfahren nach Anspruch 12,
**dadurch gekennzeichnet, dass** die Identität und die voraussichtliche Melkdauer eines Tieres ermittelt werden, und dass das Tier keinen Zutritt zur Melkmaschine (33) erhält, wenn die voraussichtliche Melkdauer länger ist als die restliche Heizungsdauer.

## Revendications

1. Dispositif (1) de nettoyage d'au moins une partie d'une ou de plusieurs machines à traire (33) destinée à traire des animaux, ledit dispositif (1) comportant :
un réservoir (2) destiné à contenir du fluide de nettoyage ;
une ligne d'alimentation (3) reliée au réservoir (2) destinée à amener du fluide de nettoyage à la partie (15, 31, 32) à nettoyer, et
un élément chauffant (6) destiné à chauffer le fluide de nettoyage,
**caractérisé en ce que** le dispositif (1) est doté d'un élément de démarrage de chauffage (34) destiné à activer l'élément chauffant (6) immédiatement après écoulement d'une période fixe prédéterminée, comptée à partir de la dernière activation du démarrage de chauffage.

2. Dispositif (1) selon la revendication 1, **caractérisé en ce que** le dispositif (1) est doté d'un élément de démarrage de nettoyage (35) destiné à démarrer le nettoyage, et d'un élément de mesure (36) destiné à mesurer la température du fluide de nettoyage et d'émettre un signal de température à l'élément de démarrage de nettoyage (35), l'élément de démarrage de nettoyage (35) lançant le nettoyage lorsque le signal de température a atteint une valeur de température prédéterminée.

3. Dispositif (1) selon la revendication 2, **caractérisé en ce que** le dispositif (1) est doté d'une mémoire (37) destinée à contenir des données de chauffage mesurées par l'élément de mesure de température (36).

4. Dispositif (1) selon la revendication 3, **caractérisé en ce que** le dispositif (1) est doté d'un élément de calcul (38) destiné à déterminer la durée de chauffage restante jusqu'à ce que la valeur de température prédéterminée soit atteinte, sur la base des données de chauffage enregistrées dans la mémoire (37) et de la température instantanée du fluide de nettoyage telle que mesurée par l'élément de mesure (36).

5. Dispositif (1) selon l'une quelconque des revendications précédentes, **caractérisé en ce que** le dispositif (1) est doté d'un élément de détection (39) destiné à détecter la présence respectivement l'absence d'un animal dans une machine à traire (33) devant être nettoyée.

6. Dispositif (1) selon la revendication 5, **caractérisé en ce que** l'élément de détection (39) convient à l'émission d'un signal à l'élément de démarrage de nettoyage (35).

7. Dispositif (1) selon la revendication 6, **caractérisé en ce que** l'élément de démarrage de nettoyage (35) ne peut être activé qu'à réception d'un signal provenant de l'élément de détection (39) indiquant qu'aucun animal n'est présent dans la machine à traire (33) devant être nettoyée.

8. Dispositif (1) selon la revendication 4, **caractérisé en ce que** le dispositif (1) est doté d'un système d'identification (40) destiné à établir l'identité d'un animal, ledit système d'identification (40) contenant des données par rapport à la durée attendue de traite de l'animal, et **en ce que** la machine à traire (33) présente une porte d'entrée (41) commandée au moyen de l'élément de calcul (38), ladite porte d'entrée (41) étant fermée lorsque la durée attendue de traite est supérieure à la durée de chauffage restante.

9. Procédé de nettoyage d'au moins une partie (15, 31, 32) d'une machine à traire (33), ledit procédé comprenant l'étape de chauffage du fluide de nettoyage, **caractérisé en ce que** le chauffage du fluide de nettoyage commence immédiatement après écoulement d'une période fixe, prédéterminée comptée à partir de la dernière activation du démarrage de chauffage.

10. Procédé selon la revendication 9, **caractérisé en ce que** la température du fluide de nettoyage est mesurée, le nettoyage étant lancé après que la température a atteint une valeur de température prédéterminée.

11. Procédé selon la revendication 10, **caractérisé en ce que** les données de chauffage mesurées sont enregistrées dans une mémoire (37).

12. Procédé selon la revendication 11, **caractérisé en ce que** la durée de chauffage restante jusqu'à ce que la valeur de température prédéterminée soit atteinte est déterminée sur la base des données de chauffage enregistrées dans la mémoire (37) et de la température instantanée mesurée du fluide de nettoyage.

13. Procédé selon l'une quelconque des revendications précédentes 9 à 12, **caractérisé en ce que** la présence respectivement l'absence d'un animal dans la machine à traire (33) est détectée.

14. Procédé selon la revendication 13, **caractérisé en ce que** le nettoyage est seulement activé lorsque aucun animal n'est présent dans la machine à traire (33).

15. Procédé selon la revendication 12, **caractérisé en ce que** l'identité et la durée attendue de traite d'un animal sont déterminées et **en ce que** l'animal n'est pas autorisé à entrer dans la machine à traire (33) lorsque la durée attendue de traite est supérieure à la durée de chauffage restante.
